# EUROPÄISCHE PATENTANMELDUNG

(11) **EP 0 699 014 A1**
(43) Veröffentlichungstag der Anmeldung: **28.02.1996**
(21) Anmeldenummer: 95113304.0
(22) Anmeldetag: 24.08.1995
(51) Int. Cl.: H05B 6/12, H05B 6/36

(54) **Induktionskochplatte**

(30) Priorität: 26.08.1994 DE 9413820 U
(71) Anmelder: AEG Hausgeräte GmbH, D-90429 Nürnberg (DE)
(72) Erfinder: Gehrke, Bernd, Dipl.-Ing., D-91339 Igensdorf (DE); Kofidis, Georgios, Dipl.-Ing., D-90429 Nürnberg (DE)
(74) Vertreter: Kuhn, Rudolf, Ing. (grad)

(57) **Zusammenfassung**

Induktionskochplatte mit wenigstens einer Kochzone (1) für ein Gefäß sowie mit einer im Bereich der Kochzone vorgesehenen induktiven Spulenanordnung (2), die mit Wechselstrom betreibbar ist. Um bei einer solchen Induktionskochplatte bei einfachem Aufbau eine selbsttätige Abschwächung der Störstrahlung zu erreichen, ist die Spulenanordnung aus wenigstens zwei räumlich nebeneinander benachbarten Einzelspulen (2) gebildet, die elektrisch in Serie geschaltet und die gegenphasig mit Wechselstrom versorgbar sind, derart, daß einander entgegengerichtete Magnetfeldlinien auftreten.

## Beschreibung

Die Erfindung betrifft eine Induktionskochplatte nach dem Oberbegriff des Patentanspruchs 1.

Es ist bei Induktionskochplatten ganz allgemein bekannt, einer Kochzone, die für das Aufstellen eines Gefäßes bestimmt ist, eine Spulenanordnung aus einer die Kochzone untergreifenden Lagenspule zuzuordnen. Diese Lagenspule wird aus einem Hochfrequenzgenerator mit Wechselstrom gespeist. Von Nachteil ist dabei, daß diese Lagenspule insbesondere in den Randzonen hohe magnetische Streufelder erzeugt, die in den Aktionsbereich des Nutzers reichen und auch Störungen in anderen nahe benachbarten Geräten bewirken können. Um diese Störstrahlung zu verhindern, ist ein hoher technischer Aufwand zur Abschirmung mittels geeigneter Abschirmbleche oder dgl. erforderlich.

Der Erfindung liegt die Aufgabe zugrunde, bei einer Induktionskochplatte der in Rede stehenden Art Maßnahmen zu treffen, durch welche bei einfachem Aufbau eine selbsttätige Abschwächung der Störstrahlung erreicht wird.

Die Lösung dieser Aufgabe gemäß der Erfindung ist dem kennzeichnenden Teil des Patentanspruchs 1 zu entnehmen.

Vorteilhafte weitere Ausgestaltungen des Gegenstandes der Erfindung sind in den Unteransprüchen angegeben.

Bei der Ausgestaltung einer Induktionskochplatte gemäß der Erfindung heben sich aufgrund der gegenphasig erzeugten Magnetfelder insbesondere in den Randzonen der Einzelspulen auftretende Störfelder zumindest teilweise auf, so daß die angestrebte Verminderung selbsttätig eintritt. Die Einzelspulen werden dabei insbesonder elektrisch in Serie geschaltet, so daß sie aus einem Hochfrequenzgenerator gespeist werden können. Dabei ist die Anzahl der Einzelspulen vorzugsweise ein Vielfaches von zwei, so daß benachbarte Einzelspulen die störfeldlöschende Wirkung erzeugen. Die Umfangskontur der Einzelspulen kann kreisförmig, kreissegmentförmig oder halbkreisförmig sein, wobei die Segmentspitze zum mittleren Bereich der Kochzone hin gerichtet wird, um eine optimale gleichmäßige Verteilung der elektrischen Feldlinien über den Bereich der Kochzone zu erzielen. Bei rechteckiger Ausgestaltung der Kochzone können auch entsprechend rechteckförmig geformte Einzelspulen zur Anwendung gelangen. Vorzugsweise weisen benachbarte Einzelspulen einen gegenläufigen Wicklungssinn auf, so daß beispielsweise die äußeren Anschlüsse eines Spulenpaares zusammengeschaltet werden können.

Die Erfindung wird nachfolgend anhand der Zeichnung eines Ausführungsbeispiels näher erläutert, wobei eine Kochzone in einer vorzugsweise mehrere solcher Kochzonen aufweisenden Induktionskochplatte dargestellt ist.

Unterhalb einer auf einer keramischen Glasplatte durch Strich- oder Flächenkennzeichnung kenntlich gemachte Kochzone 1 befinden sich vorliegend vier symmetrisch zur kreisförmigen Kochfläche 1 angeordnete einlagige, spiralig gewickelte Einzelspulen 2, die in Umfangsrichtung abwechselnd gegenphasig aus einem nicht dargestellten an sich bekannten Hochfrequenzgenerator mit Wechselstrom gespeist werden. Die Einzelspulen 2 sind dabei in Serienschaltung an dem Hochfrequenzgenerator angeschaltet, wobei durch Wahl des Wicklungssinns oder entsprechendes Tauschen der Anschlüsse die Einzelspulen im stromdurchflossenen Zustand jeweils gegenüber der seitlich benachbarten Einzelspule 2 ein gegenläufiges hochfrequentes Magnetfeld erzeugen. Diametral gegenüberliegende Einzelspulen 2 weisen somit jeweils gleiche Feldlinienrichtung auf, während die jeweils benachbarten Einzelspulen 2 eine demgegenüber umgekehrte Magnetfeldrichtung erzeugen. Jeweils nach oben gerichtete Feldlinienrichtungen der Einzelspulen 2 sind durch einen Punkt in einem Kreis und nach unten gerichtete Feldlinienrichtungen in den Einzelspulen 2 durch ein Kreuz in einem Kreis angedeutet. Von Vorteil ist dabei, daß sich nach außerhalb der Kochzone 1 gerichtete hochfrequente Magnetfelder zum Teil gegenseitig aufheben und dadurch die Störstrahlung erheblich vermindern. Die Anzahl der Einzelspulen muß bei der beschriebenen Kochzone immer ein Vielfaches von Zwei sein.

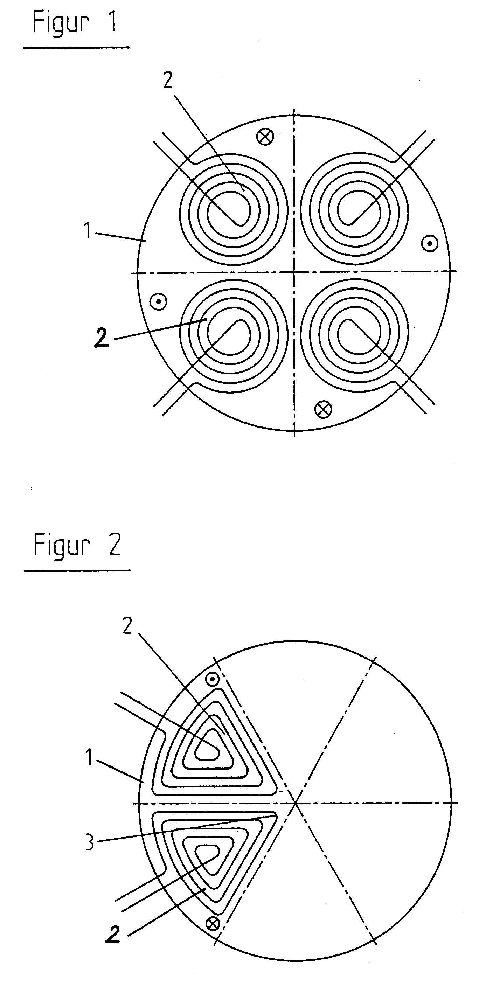

Gemäß Fig. 2 ist es auch möglich, wenigstens eine vorzugsweise aber alle Einzelspulen als Kreissegemente auszubilden, wobei die Segmentspitzen zum mittleren Bereich der Kochzone hin gerichtet ist. Es ergibt sich dadurch eine weitgehend lückenlose Bedeckung der Kochzone mit den Einzelspulen 2 und damit eine gleichmäßige Energieverteilung über die Kochfläche 1. Bei anderer Umrißform der Kochfläche kann auch die Anwendung von Einzelspulen vorteilhaft sein, die eine rechteckförmige Umfangskontur aufweisen. Dabei kann es zweckmäßig sein, segmentförmige, halbkreisförmige, kreisförmige oder rechteckige Einzelwicklungen zu kombinieren.

Insgesamt ergibt sich durch die Aufteilung der jeder Kochzone zugeordneten Induktionsspule in mehrere Einzelspulen mit wechselweise entgegengerichteten Feldlinien eine Abschwächung der magnetischen Feldstärke durch Kompensation von Feldlinienanteilen insbesondere im äußeren Umfangsbereich der Kochplatte, so daß umfangreiche und aufwendige technische Maßnahmen zur Abschirmung der störenden Streufeldstärke vermieden werden.

## Patentansprüche

1. Induktionskochplatte mit wenigstens einer Kochzone (1) für ein Gefäß sowie mit einer im Bereich der Kochzone vorgesehenen induktiven Spulenanordnung (2), die mit Wechselstrom betreibbar ist, dadurch gekennzeichnet, daß die Spulenanordnung aus wenigstens zwei räumlich nebeneinander benachbarten Einzelspulen (2) besteht, die elektrisch in Serie geschaltet und die gegenphasig mit Wechselstrom versorgbar sind, derart, daß einander entgegengerichtete Magnetfeldlinien auftreten.

2. Induktionskochplatte nach Anspruch 1, dadurch gekennzeichnet, daß die Anzahl der Einzelspulen ein Vielfaches von Zwei ist.

3. Induktionskochplatte nach Anspruch 1 oder 2, dadurch gekennzeichnet, daß wenigstens zwei Einzelspulen (2) eine kreisförmige Umfangskontur aufweisen.

4. Induktionskochplatte nach Anspruch 1 oder 2, dadurch gekennzeichnet, daß wenigstens zwei Einzelspulen (2) eine kreissegmentförmige Umfangskontur aufweisen, wobei deren Segmentspitze (3) zum mittleren Bereich der Kochzone (1) hin gerichtet ist.

5. Induktionskochplatte nach Anspruch 1 oder 2, dadurch gekennzeichnet, daß wenigstens zwei Einzelspulen eine rechteckförmige Umfangskontur aufweisen.

6. Induktionskochplatte nach Anspruch 1 oder einem der folgenden, dadurch gekennzeichnet, daß benachbarte Einzelspulen (2) einen gegenläufigen Wicklungssinn aufweisen.

7. Induktionskochplatte nach Anspruch 1 oder 2, dadurch gekennzeichnet, daß wenigstens zwei Einzelspulen eine halbkreisförmige Umfangskontur aufweisen.
